Europäisches Patentamt

(19) European Patent Office

Office européen des brevets

(11) Publication number: **0 194 733**
**B1**

(12) EUROPEAN PATENT SPECIFICATION

(45) Date of publication of patent specification: **16.05.90**

(21) Application number: **86200407.4**

(22) Date of filing: **14.03.86**

(51) Int. Cl.⁵: **A 01 C 17/00**

(54) Apparatus for spreading granular and/or pulverulent material.

(30) Priority: **15.03.85 NL 8500759**

(43) Date of publication of application:
**17.09.86 Bulletin 86/38**

(45) Publication of the grant of the patent:
**16.05.90 Bulletin 90/20**

(84) Designated Contracting States:
**AT BE CH DE FR GB IT LI**

(56) References cited:
**DE-A-2 652 914**
**GB-A-2 034 163**

(73) Proprietor: **C. van der Lely N.V.**
**Weverskade 10 P.O. Box 26**
**NL-3155 ZG Maasland (NL)**

(72) Inventor: **van der Lely, Ary**
**10A, Weverskade**
**Maasland (NL)**
Inventor: **Bom, Cornelis Johannes Gerardus**
**16, Laan van Nieuw Rozenburg**
**Rozenburg (NL)**

(74) Representative: **Mulder, Herman et al**
**Octrooibureau Van der Lely N.V. Weverskade 10**
**P.O. Box 26**
**NL-3155 ZG Maasland (NL)**

Courier Press, Leamington Spa, England.

## Description

This invention relates to an apparatus for spreading granular and/or pulverulent material, comprising a frame and a hopper having two discharge funnels, a spreader member being disposed under each funnel, each discharge funnel has at least one discharge aperture through which the material can be fed from the hopper to the respective spreader member, a movable closing member being disposed near each of these discharge apertures for optionally closing the respective discharge aperture to a greater or lesser extent, these closing members being placed against the bottom wall around the discharge aperture.

An apparatus of this type is known from the UK application GB—A—2034163. In this known construction the closing members are rotatably supported between the bottom parts of the hopper and supporting rings mounted to the bottom parts.

It is an object of the invention to simplify the construction of an apparatus of the abovementioned type.

According to the invention, this can be accomplished in that the two closing members are intercoupled and being placed together against the bottom wall around the respective discharge aperture whilst being kept under tension by means of a spring-loaded member and being freely movable in a direction away from the bottom wall against the action of the spring-loaded member. This renders it possible for the hopper and the closing members to be manufactured advantageously. Further, an advantageous action of the closing members can always be obtained without the risk that they stick inadvertently to the wall.

Further it offers the advantage that the closing members can be moved away from the walls to move away dirt eventually getted between the closing members and the wall and as a jamming of the members to the walls is prevented.

An advantageous setting of the closing members is obtained when each closing member is supported by an adjusting arm and by the spring-loaded member. In a further construction the spring-loaded member being coupled to an adjusting member for the two closing members, the adjusting member being disposed at supports in the apparatus. Thus, the closing members can be made to move with respect to the relevant discharge apertures by means of simple construction.

In accordance with a further embodiment, the two spreader members are disposed on shafts which are bearing-supported in a transmission box, which by means of carrier beams is coupled to discharge portion of the hopper. Thus, a more advantageous position of the spreader members relative to the hopper discharge portion is obtained.

The invention will now be described in greater detail by way of example with reference to an embodiment of the apparatus according to the invention, shown in the accompanying drawings.

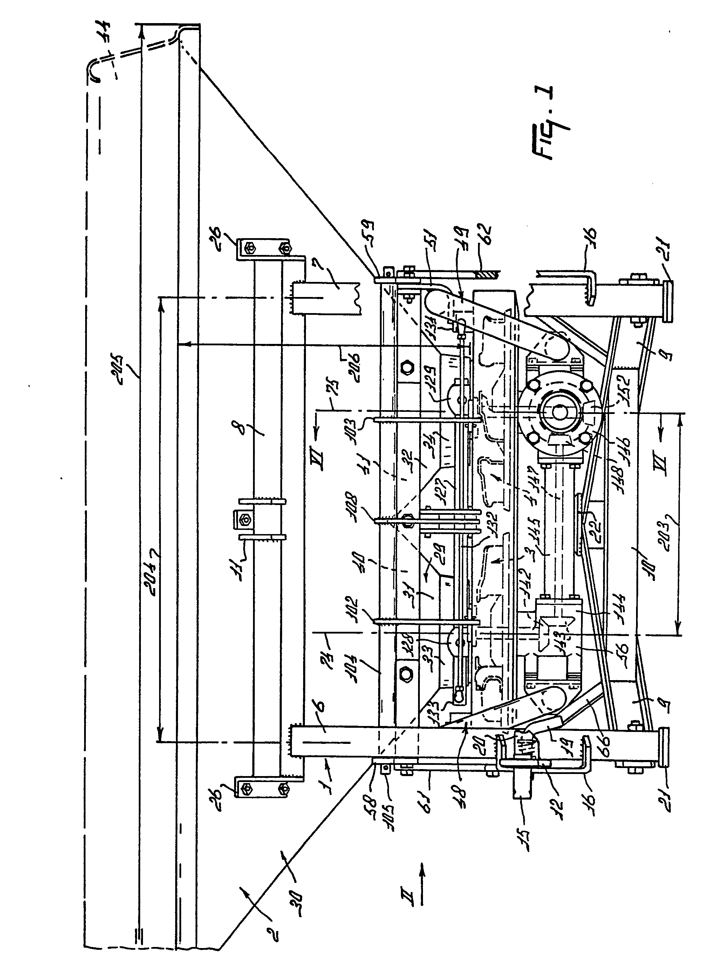

Figure 1 is a front view of an apparatus according to the invention.

Figure 2 is a side view of the apparatus of Figure 1, viewed in the direction of the arrow II in Figure 1.

Figure 3 is a plan view of a portion of the apparatus, the upper portion of the hopper having been removed, the view being along the line III—III in Figure 2.

Figure 4 illustrates, on an enlarged scale, a cross-section of a portion of the apparatus, seen along the line IV—IV in Figure 3.

Figure 5 is a plan view of the spreader member shown in Figure 4.

Figure 6 illustrates a vertical cross-section of a portion of the apparatus, viewed along the line VI—VI in Figure 1.

The apparatus illustrated in the drawings is a spreader apparatus for spreading material. The apparatus has a frame 1 to which a hopper 2 and spreader members 3 and 4, located under the hopper, are disposed. At the front of the apparatus, the frame 1 has two upwardly extending frame pillars 6 and 7, whose top ends are interconnected by a horizontal beam 8. The lower ends of the beams 6 and 7 are interconnected by a rearwardly extending support which is formed by two forwardly diverging supporting beams 9 and an intermediate beam 10 disposed thereinbetween. The frame beam 8 has two fastening lugs 11. Coupling arms 12 are disposed on the remote sides of the frame pillars 6 and 7. These coupling arms are pivotable around hinge pins 14 fastened to fastening strips 13 at the rear of the pillars 6 and 7. From the hinge pins the coupling arms extend forwardly and they are each provided near their front end with a coupling pin 15. The pins 15 extend to the remote sides of the coupling arms 12. Brackets 16, each having two holes 17 and 18, are fastened to the front of the frame pillars 6 and 7, near the coupling arms 12. In front view, the bracket 16 and the outer side of the respective frame pillars 6 or 7 form a slotted aperture through which the coupling arm 12 extends. At the remote side of the bracket, i.e. the facing sides of the coupling arms 12, locking pins 19 are disposed which are located in a cover fastened to the coupling arms 12, spring pressure, not shown, being exerted on these locking pins.

The lower ends of the frame pillars 6 and 7 have front feet 21. The rear side of the supporting beams 9 is provided with lugs 22, the bottommost lug having a rear foot 23.

The frame beam 8 includes connecting strips 26 to which the hopper 2 is bolted.

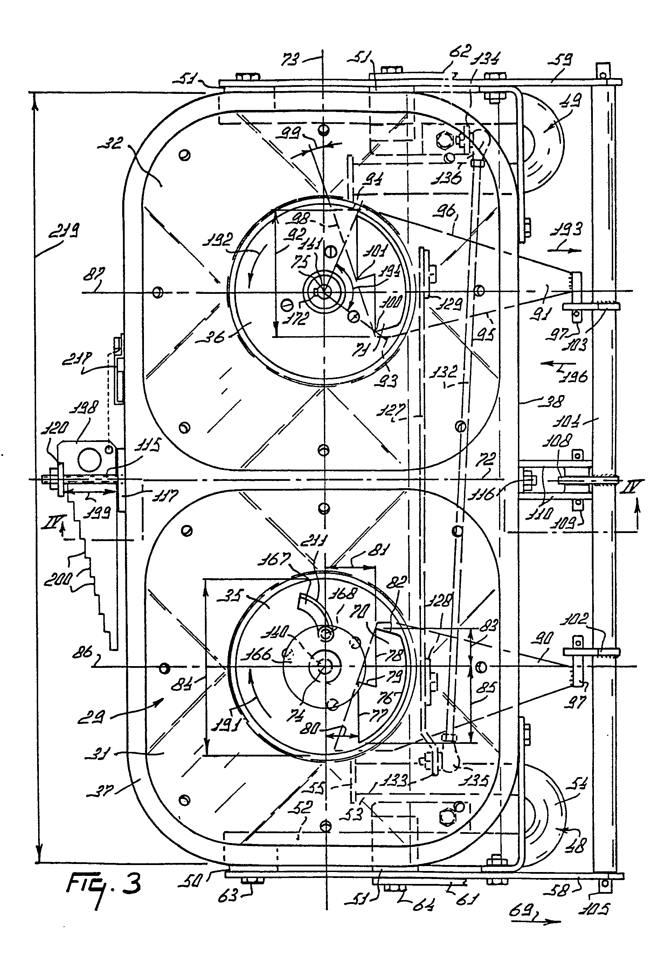

At its bottom the hopper 2 has a discharge portion 29, in whose top the bottom side of an upper portion 30 of the hopper fits. The discharge portion 29 includes two discharge funnels 31 and 32, which converge towards the bottom and have at their bottom side at least substantially cylindrical discharge nozzles 33 having flat round bottoms 35 and 36. The discharge portion 29 has at the upper side of the discharge funnels 31 and 32 an upper edge 37 which is located horizontally, as are also the bottoms 35 and 36, when the apparatus is in the vertical position. The upper edge 37 is predominantly rectangular and has curved-down connecting edges 38 at its periphery. The edges 37 and 38 constitute a supporting edge at the upper side of the discharge portion 29. As is illustrated more specifically in Figure 3, the upper sides of the discharge funnels 31 and 32 are approximately square with rounded corners. Short, downwardly converging discharge nozzles 40 and 41 of the upper portion 30 of the hopper fit in the upper side of these discharge funnels. The nozzles 40 and 41 are bolted to the discharge funnels 31 and 32 by bolts 39.

A sieve 42 which bears on supports 43 in the hopper is disposed approximately halfway the height 206 of the hopper 2. In this embodiment, an attachment 44 is disposed at the upper side of the hopper portion 30.

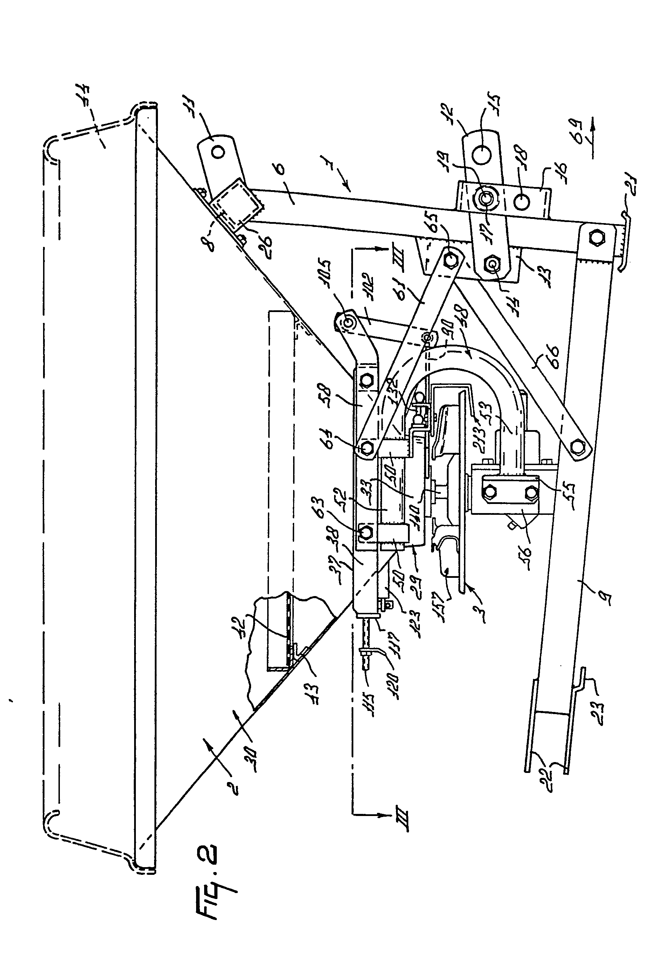

Two carrier beams 48 and 49 are fastened to the discharge portion 29. In side elevational view (Figure 2) the carrier beams are U-shaped, curved beams with horizontal upper legs 52 and lower legs 53, which are interconnected by means of a curved portion 54. Connecting strips 50 and 51, respectively are fastened to the upper legs 52, which strips are fastened at the facing sides of the connecting edge 38 and of the discharge funnels 31 and 32 by means of bolts 63 and 64. Supporting arms 58 and 59 are fastened to the connecting edge 38 by means of the bolts 63 and 64. The discharge portion 29 and, together therewith, the lower edge of the hopper 2 bear on the frame 1 by coupling members constituted by carrier beams 61 and 62. These beams are also connected to the supporting edge 38 by means of bolts 64 and to the connecting strip 13 by means of bolts 65.

By means of the bolts 65, brace rods 66 are connected between the pillars 6 and 7 and the beams 9, to the strip 13 and the relevant beam 9.

Discharge apertures 70 and 71 are provided in the bottom walls 35 and 36 of the discharge nozzles 33 and 44. These discharge apertures are identical to each other, are of a symmetrical shape and are located symmetrically with respect to the centre plane 72 which includes the centre line of the apparatus and extends in the normal direction of travel 69 of the apparatus. The discharge apertures 70 and 71 are located before the plane 73 which extends perpendicularly to the centre plane 72 and contains the centre lines 74 and 75 of the discharge funnels 31 and 32 and the discharge nozzles 33 and 34. Only one of the identical discharge apertures 70, 71 is illustrated in greater detail. The discharge aperture 70 has a curved edge 76 located near the periphery of the bottom wall 35 of the discharge nozzle 34. Additionally, the discharge aperture is formed by two parallel edges 77 and 78 which are in parallel with the transverse plane 73. The edges 77 and 78 are of approximately the same lengths and are interconnected by an intermediate edge 79, which is located approximately radially relative to the centre line 74. The edge 77 is at a distance 80 from the transverse plane 73, which is less than the distance 81 at which the edge 78 is located from the transverse plane 73. By means of one end the edge 77 is contiguous to the edge 76 whilst that end of the edge 78 which faces away from the intermediate edge 79 is contiguous to the edge portion 82 extending between the edge 76 and the edge 78. The edge 72 is approximately in parallel with the intermediate edge 79. The aperture 70 extends on both sides of a longitudinal plane 86 which contains the centre line 74 and, in the normal direction of travel 69, extends in parallel with the centre plane 72. The opening 70 extends over a distance 83 to that side of the plane 86 which is directed to the centre plane 72. To the other side the aperture 70 extends over a distance 85, which exceeds the distance 83 and, in this embodiment, is approximately equal to twice the distance 83. In this situation the distance 85 is approximately equal to half the diameter 84 of the bottom 35. The aperture 71 extends in a similar way on both sides of a longitudinal plane 87, which includes the centre line 75, as does the aperture 70 with respect to the longitudinal plane 86.

A closing member 90 and 91 in the form of a dosing slide respectively is arranged below each of the discharge apertures 70 and 71 for enabling the discharge apertures 70 and 71 to be closed to a greater or lesser extent. The closing members 90 and 91, as are also the discharge apertures 70 and 71, are identical and also symmetrical to each other, and are positioned in mutual symmetry relative to the centre plane 72. The shape of the dosing slides will be described in greater detail on the basis of the dosing slide 91.

Measured in a direction transversely of the normal direction of travel 79 the closing member 91 has a width 92. This width 92 is somewhat larger than the overall widths 83 and 85 of the discharge aperture 71. The dosing slide 91 has two edges 93 and 94 which extend in parallel with each other and are located on both sides of the discharge aperture 71, viewed in the lateral direction of the apparatus, that is to say, in a direction parallel to the plane 73. The edges 93 and 94 are contiguous to edges 95 and 96 which with respect to each other converge forwardly and are fastened by means of their front ends to a supporting pin 97. In addition, the edges 93 and 94 are contiguous to a terminating edge 98 which, relative to the plane 73, as illustrated in Figure 3, extends at an angle 99 of approximately 20°. The angle 99 diverges to the plane 72. The terminating edge 98 extends in this situation in parallel with an imaginary line through the points 100 and 101 in which the edges 77, 79 and 78, 79, respectively are contiguous to each other. Corresponding edge portions of the dosing slide 90 are given the same reference numerals as those of the edges of the slide 91.

The supporting pins 97 of the slides 90 and 91 are located near the longitudinal planes 86 and 87. The facing ends of the supporting pins 97 are arranged pivotally in holes, not shown, of adjusting arms 102 and 103 in the form of strips. These adjusting arms are rigidly fastened to an adjusting shaft 104 which extends transversely of the normal direction of travel 69 in parallel with the plane 73. As can be seen from the Figures 2 and 3, the adjusting shaft 104 is located before the discharge portion 29 and approximately in the region of the supporting edge 37, 38. The adjusting shaft 104 is constituted by a tube which is bearing-supported, capable of rotation around its longitudinal axis, in a shaft 105 which is bearing-supported in the carrier arms 58 and 59.

A coupling arm 108 which by means of a hinge pin 109 is coupled capable of hinging to two spaced apart intermediate arms 110 is fixed in the centre of the adjusting shaft 104. The intermediate arms 110 are coupled capable of hinging by means of a pin 111 to a lug 112 of an adjusting member 113. The adjusting member 113 includes a strip 114 on both sides of which pins 115 and 116 are provided, which are slidingly bearing-supported in synthetic resin material sliding sleeves 117 and 118. These sliding sleeves are disposed in the down-curving connecting edge 38 of the supporting edge of the discharge portion 29. The remote ends of the pins 115 and 116 are provided with screw-thread portions on which stops 120 and 121 are provided which are adjustable in the longitudinal direction of the pins 115 and 116 by rotation around the screw-thread. A pin 122 is rigidly connected to the connecting edge 38 near the sliding sleeve 117. A control member constituted by a hydraulic cylinder 123 which can be connected by means of lines 124 and 125 to a hydraulic circuit of, for example, a tractor is disposed between the pin 122 and the strip 117. The cylinder 123 is coupled to the pin 122, whilst the plunger rod 126 movable in the cylinder 123 is pivotally coupled to the strip 112.

The two dosing slides 90 and 91 are coupled to each other by means of a coupling strip 127 which is connected to the lugs 128 and 129 fastened to the slides 90 and 91. One end of a tension spring 130, whose other end is coupled to the strip 114 of the adjusting member 113 is fastened to the coupling strip 127 halfway between the closing members 90 and 91. The tension spring 130 extends between the two intermediate arms 110 and has its centre line located approximately in the plane 72. By means of the coupling strip 127 the two closing members 90 and 91 are locked by a locking rod 132 to prevent lateral movement. In this situation, the locking rod 132 has one end hingeably coupled to the end 133 of the coupling strip 127. The other end of the locking rod 132 is hingeably coupled to a lug 134 which is fastened to the foremost connecting lug 51 by means of which the carrier beam 49 is connected to the supporting edge 38. The length of the locking rod 132 is adjustable as the locking rod 132 is a tube whose ends are provided with internal screw-thread. Threaded pins connected to hinges 135 and 136 which are hingeably coupled to the strip 133 and the lug 134, respectively, are accommodated in said ends.

The spreader members 3 and 4 are disposed on shafts 140 and 141 which are bearing-supported in the transmission box 56. The shaft 140 has a bevel gear wheel 143 which is bearing-supported in a transmission gear box 144 of the transmission box 56. By means of a hollow cylinder 145 the transmission gear box 144 is coupled to a gear box 146 in which the shaft 141 of the spreader member 4 is bearing-supported. A coupling shaft 147 to which the gear wheel 144 is fitted extends through the cylinder 145. The shaft 147, which is bearing-supported in the gear boxes 144 and 146, is coupled in the gear box 146 to a bevel gear wheel 148. The bevel gear wheel 148 cooperates with a bevel gear wheel 149 disposed on a drive shaft 150, which is bearing-supported in the gear box 146. Relative to the normal direction of operative travel 69 the drive shaft 150 extends forwardly and, outside the gear box, constitutes a key-slotted stub axle 151. The bevel gear wheel 149 cooperates with a bevel gear wheel 152 accommodated on the shaft 141.

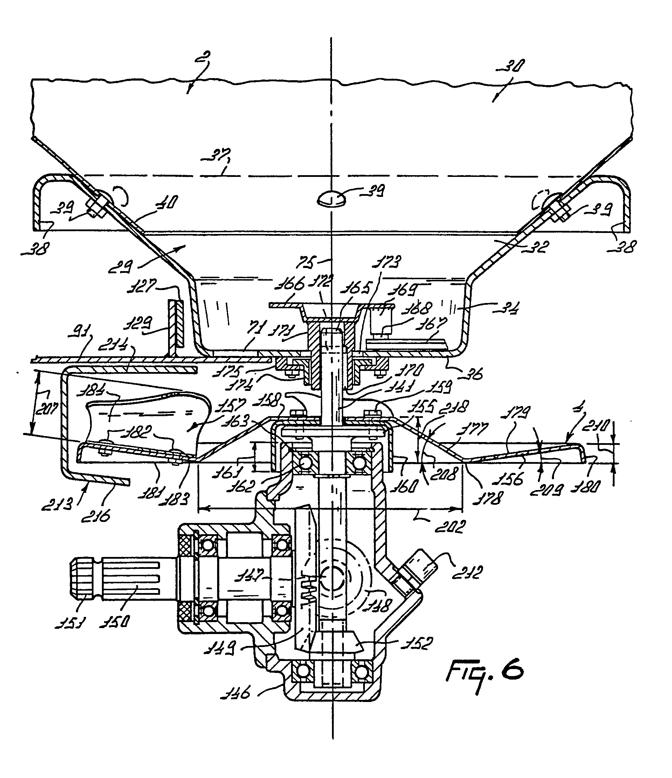

The spreader members 3 and 4 are both fastened in the same way to their respective shafts 140 and 141 and for that reason only spreader member 4 is illustrated in detail in Figure 6. The shaft 141 has a connecting ring 155 located just above the gear box 56. The spreader member 4 has a disc-shaped portin 156 to which blades 157 are fastened. The central portion 158 of the disc-shaped portion 156 is rigidly connected to the connecting ring 155 by means of bolts 159. A shielding cover 160 which is also fastened to the ring 155 by the bolts 159 and is clamped between the part 158 and the ring 155 is provided over the connecting ring 155. The cover 160 extends through a distance 161 over the upper side of the gear box 146 and is located relatively closely around the periphery thereof. The shaft 141 is bearing-supported in the upper side of the gear box 146 by means of a bearing 162, which bearing is retained in the upward direction by means of a ring 163.

The upper end 165 of the shaft 141 extends through the bottom 36 of the discharge nozzle 34 and projects into the discharge nozzle where it is provided with a stirrer member 166. The stirrer member is in the shape of a disc and has a scraper 167 which by means of a shaft 168 is rotatably bearing-supported in a bush 169 provided at the bottom side of the stirrer member 166. The scraper 167 is of a curved shape as shown in Figure 3 for the scraper in the discharge nozzle 33. The shaft 141 has a driver pin 169 which fits in a slot 170 of the hub 171 of the stirrer member 166. The hub 171 extends through an aperture 173 in the bottom 36 and is surrounded by a sealing ring 174. The ring 174 is accommodated capable of movement transversely of the shaft 141 in a carrier ring fastened to the bottom side of the bottom 36, which carrier ring has a hook-shaped cross-section. The shaft 140 is provided in a similar manner with the spreader member 3 and projects into the discharge nozzle 33, a stirrer member being fastened to it in the same way as is illustrated in Figure 6 for the spreader member 4 and the shaft 141. For that reason corresponding components are given the same reference numerals.

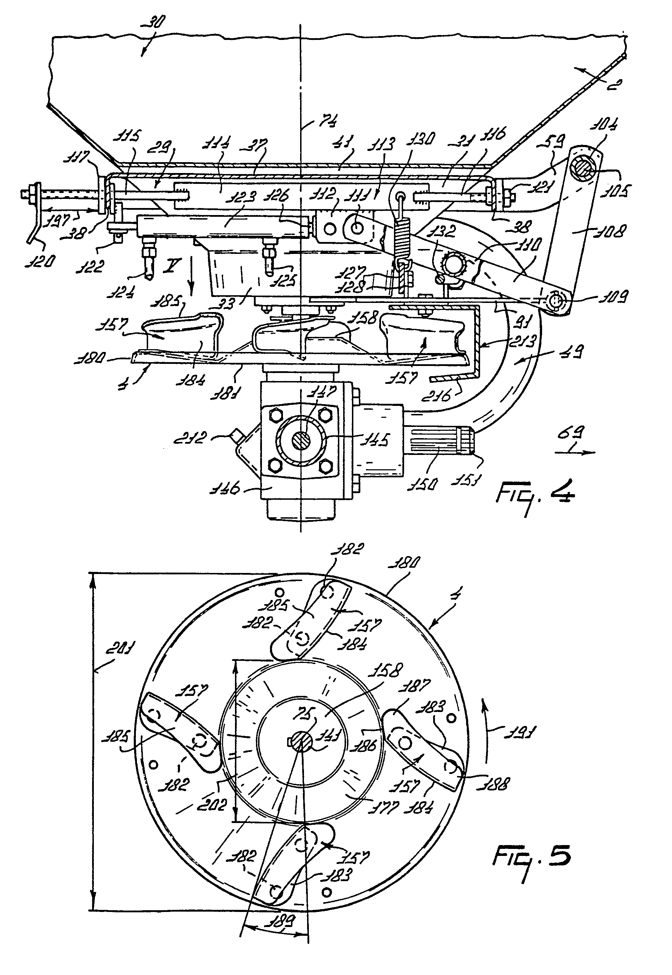

The two spreader members 3 and 4 are identical but shaped symmetrically relative to the plane 72. Therefore, only the construction of the spreader member 4 is shown in greater detail in Figures 5 and 6. The central portion 158 extends through a diameter which is approximately equal to the diameter of the shielding cover which is located with little play around the upper side of the gear box 146. A downwardly diverging, conical portion 177 of the spreader member is contiguous to the central portion 158. At the lower periphery 178 the portion 177 is contiguous to a conical portion 179 which diverges upwardly from the periphery 178 and extends to the periphery of the disc-shaped portion 156 which in this embodiment is round. Near the periphery the portion 179 passes into a curved down edge 180, whose bottom side is located in an imaginary plane 181 which also contains the lower side of the periphery 178 of the conical portion 177. In this embodiment four thrower blades 157 are bolted to the portion 179 by means of round head bolts 183. From the periphery 178 the thrower blades extend to the periphery 180 of the disc-shaped portion 156. The thrower blades are all identical and have a lower side 183 which is bolted to the portion 179 by means of the bolt 182. The thrower blades have a U-shaped cross-section, the lower side 183 passes into an upper side 185 via a vertically extending central portion 184. In plan view (Figure 5) the centre portion 184 is contiguous to the periphery 178. Near the periphery 178 the upper side 158 is shaped such that, in plan view, the begin-end of this upper side also concentrically coincides with the periphery 178. The upper side 185 is provided with a front lug 187 which extends forwardly from the centre portion 185 and is wider than the remaining portion of the upper side 185. The front lug 187 has a rounded front end, the width of the upper side tapering to a smaller width from this rounding, as is shown in Figure 5, to the periphery of the disc-shaped portion 156. In a plan view, the end portion 188 of the upper side 185 is slightly narrower than the bottom side 183 of the thrower blade. Near the periphery of the disc-shaped portion 156, the bottom side 183 is slightly wider than near the periphery 178, as is shown in Figure 5. The centre portion 184 extends through an angle 189 of approximately 15° around the rotational axis 75. The rotational axis 75 which constitutes the centre line of the discharge nozzle 34 coincides with the centre line of the axis 75. In a plan view, the centre portion 184 is curved from the end located near the periphery 178 to the ends near the periphery 180.

The end 190 of the centre portion 184 extends approximately radially relative to the rotational axis 75. The axis 75 constitutes the centre line of the shaft 141 and coincides with the centre line of the discharge nozzle 32 of the hopper and is therefore given the same reference numeral.

The spreader member 3 is symmetrical with respect to the plane 72 relative to the spreader member 4. However, the spreader member 3 and the spreader member 4 are, in plan, offset such relative to each other around their shafts 74 and 75 that when a thrower blade of one spreader member has its end 180 located nearest to the plane 72 the thrower blades of the other spreader member are still approximately 45° removed from this plane around their respective rotational axes. Thus, the spreader members are offset from each other at an angle which is equal to half the angle between two consecutive blades of each spreader member.

During operation, the apparatus is coupled to the lifting device of a tractor or suchlike vehicle. In this situation the strips 11 can be coupled to the top rod and the pins 15 to the lift arms of the three-point lifting device. During use, the arms to which the pins are connected are locked against rotation around the hinge pins 14 by means of the locking pins 19. The stub axle 151 of the drive shaft 150 is coupled to the power take-off shaft of the tractor or a suchlike vehicle by means of an intermediate shaft.

During operation the spreader members are driven from the power take-off shaft via the drive shaft 150 and the transmission members in the transmission box 56. The transmission members in the transmission box 56 are arranged such that the shafts 140 and 141 and, consequently, the spreader members 3 and 4, are impelled to rotate, during operation, in the direction as indicated by the arrows 191 and 192, respectively. Then the spreader members rotate in opposition to each other, the facting sides moving in the normal direction of travel 69 of the apparatus. The spreader members 3 and 4 are symmetrical relative to the plane 72 and, in the vertical position of the apparatus, are flush with each other. The bottom sides of the two spreader members are located in one and the same plane 81. This plane is in parallel with the soil when the apparatus is in the vertical position. The apparatus is used for spreading material during movement of the apparatus in the direction 69. The material to be spread is carried along in the hopper 2 and fed from there to the spreader members through the discharge apertures 70 and 71. The location of the discharge apertures 70 and 71 and the shape and speed of rotation of the spreader members is such that both spreader members distribute the material during operation over the same strip of the field and move in the direction 69. Then the material is predominantly thrown to the rear. During normal use, each of the spreader members spreads the material for equal distances to both sides of the longitudinal plane 72. The discharge apertures 70 and 71 are symmetrically located relative to the longitudinal plane 72. Because of the symmetrical shape of the spreader members and the opposite rotation of the spreader members and said location of the discharge apertures the material will also be spread symmetrically by the spreader members relative to the longitudinal plane 72. Because of this symmetrical spreading of the material by the two spreader members a very uniform spread pattern is achieved.

The quantity of material spread per unit of time by the spreader members can be adjusted by closing the discharge apertures 70 and 71 to a greater or lesser extent by means of the dosing slides 90 and 91. For this purpose the dosing slides can be reciprocated rectilinearly in the direction 193 parallel to the symmetry plane 72 up front and in the direction 196 to the rear, respectively. Each of the discharge apertures 70 and 71 extends through an angle 194 of slightly more than 90° around the respective rotational axes 74 and 75. In this embodiment the angle 194 is approximately 110°. In this situation the material is fed through this angle to the respective spreader members. The spreader members can then each throw the material through a very wide spread angle of approximately 180°. The shape of the discharge apertures 70 and 71 and of the respective closing members 90 and 91 is such that when very small quantities of material must be fed per unit of time from the hopper to the spreader members for spreading very small quantities of material per unit of surface, the material is yet fed through a large angle around the respective rotational axes to the spreader members. Thus, both when the discharge apertures are fully open and when they are nearly closed, it will be possible for the two spreader members to yet spread the material through the same spread angles. For this purpose the edge 98 of the dosing slides is provided, as has been described in the foregoing and is shown in the drawings, such that from fully closed discharge apertures these apertures will be opened from the two angular points 100 and 101, which are offset relative to each other through a rather large angle around the respective shafts 74 and 75, which angle is approximately equally large or larger, than half the angle 194. Before the line 98 passes the point 195 in which the sides 78 and 79 abut, the material will flow through two mutually separated portions of the discharge apertures from the discharge nozzles to the respective spreader members. The material flowing from these two separate portions distributes itself to a very large extent over the spreader members so that the material can be spread over the same spread sectors, both when the feed-through portion of the discharge apertures is small and large.

The material fed to the spreader members lands on the downwardly diverging conical portions 177 above which the discharge apertures are located. The downwards flowing material falls on the conical plane 177 and is guided to the periphery 178 where it is fed to the front ends of the thrower blades 157 and the plane 179. All the material is caught, during rotation, by the thrower blades. The shape of the blades has been chosen such that the material is caught very uniformly and is discharged to the periphery of the spreader members and is spread. For an appropriate collection of the material, the upper sides 185 are provided with the projecting upper lugs 187. At the starting point of the blade the centre portion 184 is at least partially straight and perpendicular to the portion 179.

The disc-shaped portions 156 of the two spreader members are round and identical. The disc-shaped portions 156 are provided near the circumference with two holes 195, for each spreader member one of these holes being used for fastening the blades to the portions 156. Thus the production of the spreader members is simplified.

The closing members 90 and 91 can be moved by means of their coupling in the direction of the arrows 193 and 196 via the pins 97 and the arms 102 and 103 to the adjusting shaft 104. Rotation of the tube 104 around its longitudinal axis is obtained by means of the adjusting member 113, which in this embodiment is coupled to a hydraulically operable control member 123 and can be operated via, for example, the lines 124 and 125 from the tractor from near the driver's seat. By displacing the plunger rod 126 relative to the cylinder 123 the lug 112 and consequently the adjusting member 113 can reciprocate in its guides 117 and 118. Because of this reciprocating motion the adjusting shaft 104 is rotatable by means of the lug 112, the intermediate arms 110 and the coupling arm 108. The motion of the adjusting member 113 and consequently of the dosing slides 90 and 91 is limited by limiting the motion of the strip 114. For that purpose this strip is provided with adjustable stops 120 and 121. The location of the stop 121 against the sliding sleeve 118 limits the motion of the dosing slides in the direction 196. The position of the stop 121 with respect to the pin 116 has been chosen such that when it contacts the bush 118 the discharge apertures 70 and 71 are fully closed by the closing members 90 and 91.

The slides can be moved in the direction indicated by the arrow 193 by pushing the rod 126 from the cylinder. This motion is limited by the stop 120 on the pins 115. In this situation, the stop 120 can be moved up against the sliding sleeve 117, so that the motion of the strip 114 is limited, which also constitutes the limitation of the motion of the closing members 90 and 91 in the direction of the arrow 193. The stop 120 may be provided such that the relevant motion is limited until the edges 98 touch the curved edges 76 of the discharge apertures, so that these discharge apertures are fully open. The stop 120 can be adjusted such with respect to the pin 115 that the apertures can only be partially opened by the closing members 90 and 91. Now the distance 197, the discharge apertures being closed, can be adjusted such by an adjusting plate 198, that the discharge apertures can be opened fully or only partly. The desired distance 197 can be adjusted by the desired width of the stepped widths of the adjusting plate 198, which in this embodiment has ten steps. When not in use, the adjusting plate 198 can be accommodated in a holder 217 fastened to the supporting edge 37.

The closing members 90 and 91 are supported by the adjusting arms 102 and 103, respectively, in which the pins 97 are arranged capable of hinging, and by the spring 130 via the coupling strip 127. The spring 130 continuously exercises an upwardly directed force on the coupling strip 127. Consequently, the closing members 90 and 91, which are capable of hinging in the vertical direction because of the pins 97, will continuously be kept against the respective bottoms 35 and 36 by the action of the spring. Thus, the slides 90 and 91 are always appropriately contiguous against the bottom of the bottoms. As the closing members do not have any guide means in a direction away from the walls constituted by the bottoms, they can easily be moved away from the bottoms. This offers the advantage that when dirt gets between the slides and the bottom, jamming of the slides is prevented. Should the slides be slightly jammed against the bottoms, it will be easy to release them again since they can freely move downwards against the action of the spring 130.

The position of the closing members 90 and 91 relative to their respective discharge apertures 70 and 71 can be adjusted in a direction transversely of the plane 72 and the direction of operative travel 69 by adjusting the length of the locking rod 132, by means of which the spacing between the lug 134 and the lug 133 is set. To enable setting in this transverse direction, the pins 97 are accommodated capable of movement in their longitudinal directions, in the holes of the adjusting arms 102 and 103. The distance between the closing members 90 and 91 may be adjustable when the connection of the coupling rod 127 in the transverse direction is adjustable relative to at least one of the lugs 128 or 129. The construction shown accomplishes an advantageous dosing mechanism which can be easily operated by means of the adjusting member and can be set. The illustrated manner of disposing the closing members 90 and 91 facilitates the construction of the apparatus, more specifically when the dimensions of the different components of the apparatus are comparatively small, as in the embodiment. By keeping the dimensions relatively small, the apparatus can be manufactured in an advantageous manner and cheaply. The comparatively small apparatus is then suitable for advantageous use for specific purposes. More specifically when materials must be spread in small quantities per unit of surface, a small apparatus is advantageous. The small and consequently light-weight apparatus can then be easily used in combination with a comparatively small tractor. A comparatively small and consequently light tractor may be of advantage as it does not adversely affect the structure of, for example, the soil over which the apparatus drives. This is important when the apparatus is used for spreading certain types of fertilizer, seeds or such like material, for which the apparatus according to the invention is particularly suitable.

The spreader members 3 and 4 are of such a construction that, although of small diameters, they can yet spread the material advantageously. In this embodiment the diameter 201 of the spreading members is approximately 33 cms. This allows the distance 203 between the shafts 140 and 141 to be kept comparatively small. In this embodiment the distance 203 is approximately 36 cms. The frame beams 6 and 7 are spaced apart by a larger distance 204 of approximately 75 cms. The width 205 of the hopper and consequently of the entire overall machine is approximately 160 cms. The height 206 of the hopper 2 is approximately 50 cms, whilst the attachment 44 extends approximately 15 cms above the upper side of the hopper 2.

To enable also the spread of large quantities of material per unit of time, the spreader blades 157 may contain a large quantity of material, for which they have a height 207 with their initial ends located near the periphery 178 of approximately 45 mm. The height of the blades slightly decreases towards the periphery of the spreader members and near the ends amounts to approximately half the height 207.

To ensure a proper flow of the material to the thrower blades 157, the portion 177 is located below the discharge apertures. In this situation the diameter 201 of the periphery 178 is approximately equal to the diameter 84 of the bottoms. The diameter 201 is approximately half the diameter 202. For a proper flow of the material over the portion 177, this portion 177 is positioned at an angle 208 of approximately 30° relative to the plane 181. The conical plane 179 is positioned at an angle 209 of approximately 8° relative to this plane. From the periphery 178, the plane 179 extends to the thrower disc periphery in the vertical direction over a distance 210 of approximately 12 mm. The height 218 of a spreader member centre portion constituted by the portions 158 and 177 is approximately twice the height 210. In this embodiment the height 218 is 28 mm.

The transmission gear ratio in the transmission box 56 is such that the spreader members will rotate around their rotational axes with the same or a slightly higher number of revolutions as the rotational speed of the drive shaft 150. The power take-off shaft will then preferably make 560 revs/min. With this rotational speed of the spreader members the material can be spread over a wide strip. The material can be spread up to a width of 24 metres.

The construction of the apparatus can be kept simple by pressing or otherwise making the discharge nozzles 31 and 32 together from one piece of material. Together with the supporting edge constituted by the upper edge 37 and the curved edge 38 this part is a rigid construction by means of which the discharge portion 29 can be supported by the frame 1 by means of the coupling members in the form of brace rods 61 and 62. It is also possible to fasten in a simple way the transmission box 56 and the spreader members 3 and 4 attached thereto to this supporting edge 37, 38. Because of the small distance 203 and the small diameter of the spreader members, the overall assembly of the transmission box and the spreader members is of a comparatively low weight. Consequently, this assembly can easily be connected via the supporting beams 48 and 49 to the edge 38. Although preferably made from one piece of material, the discharge portion 29 may alternatively be structured differently.

The stirrer member 166 can easily be provided on or removed from the stub axle 165 by sliding it upwards or downwards, respectively over this stub axle, the slot 170 fitting around the pin 172. The scraper 167 has an advantageous effect in loosening the material from the bottom. For this purpose it is advantageous for the front end 211 of the scraper to be curved forwardly relative to the direction of rotation 191 and 192, respectively. The scraper can easily be removed from the stirrer member because of the fact that the shaft 168 fitted to the scraper is freely movable in the vertical direction in the bush 169. After the stirrer member has been moved up from the stub axle 165 the scraper can then be easily removed by taking the shaft 168 from the bush 169. The stirrer member can then be used without the scraper 167.

The shielding cover 160 prevents material or other dirt from penetrating into the housing 146 from the upper side. Mounting and removing the shaft 141 can be easily accomplished by removing the spreader members and the cover can be easily removed from the shaft by detaching the bolts 159.

A slotted hole, not further shown, is provided in the ring 155 making it possible for the ring 163 to be removed from its groove in the housing 146. Thereafter the shaft 141 with the ball-bearing 162 can be removed from the housing. The housings 145 and 146 are provided with breather caps 212.

In addition, a cover 213 is provided around the forwardly facing side of the spreader members 3 and 4. This cover has a U-shaped cross-section and comprises an upper plate 214 and a bottom plate 216. The upper plate extends through a distance over the spreader members approximately equal to the length of the spreader groups, seen in the radial direction (Figure 6). This is approximately equal to the width of the disc-shaped portion 179. In this situation the upper side 214 extends to near the periphery of the discharge nozzles 33 and 44, which have an inside diameter 84 of approximately 17 cms. The width of the bottom side 216 is approximately equal to half the width 214. The cover 213 is straight and extends transversely of the plane 72. The capacity of the hopper 2 can be increased considerably by means of the attachment 44. In plan view, the discharge portion 29 is rectangular with rounded-off corners the width being approximately equal to half the length 219. The dosing mechanism, which is of a simple construction and in this embodiment is easily remotely controlled by the hydraulic mechanism 123, may itself alternatively be constructed such that it permits of manual operation or operation by different control members for sliding the strip 114 and consequently the closing members 90 and 91.

The cover 213 ensures that scattered grains are yet caught and discharged sideways by the rotational speed of the spreader members.

When the lifting arms of the tractor are adjusted to the same heights, the apparatus will be horizontal in the lateral direction. The apparatus can also be tilted to one or to the other side. For this purpose the pin 15 can be adjusted lower at one side relative to the frame 1 than at the other side. For this purpose the relevant arm 12 can be moved down round the relevant hinge pin 14 after the locking pin 19 has been removed from the hole 17, whereafter the locking pin 19 can be inserted in the hole in the arm 12 and the hole 18. The pin 15 is then lower at one side than at the other side. The apparatus will then be in an oblique position behind the tractor or another suchlike vehicle. The spreader members 3 and 4 then tilt to the right or to the left, depending on whether the pin at the right-hand or at the lefthand side is lower than at the other side. If in the normal operative position the two arms 12 are in their lowest position relative to the frame because the two pins 19 are in the holes 18, tilting can be accomplished by moving up one of the arms 12 and inserting the pin 19 in the hole 17. This lateral tilt can be used to throw the material to one side over shorter distances, for example for spreading edges of a surface area to be spread.

The invention relates to all the features described in the foregoing with reference to the drawings, but is not limited thereto but also extends to everything shown in the drawings and apparent therefrom, but not described in further detail, in accordance with the claims.

## Claims

1. An apparatus for spreading granular and/or pulverulent material, comprising a frame (1) and a hopper (2) having two discharge funnels (31 and 32), a spreader member (3 and 4) being disposed under each funnel, each discharge funnel has at least one discharge aperture (70 resp. 71) through which the material can be fed from the hopper (2) to the respective spreader member, a movable closing member (90, 91) being disposed near each of these discharge apertures for optionally closing the respective discharge aperture to a greater or lesser extent, these closing members being placed against the bottom wall (35, 36) around the discharge aperture, characterized in that the two closing members (90, 91) are intercoupled and being placed together against the bottom wall (35, 36) around the respective discharge aperture (70, 71) whilst being kept under tension by means of a spring-loaded member (130) and being freely movable in a direction away from the bottom wall (35, 36) against the action of the spring-loaded member (130).

2. An apparatus as claimed in claim 1, characterized in that each closing member (90 and 91) is supported by an adjusting arm (102 resp. 103) and by the spring-loaded member (130).

3. An apparatus as claimed in claim 1 or 2, characterized in that the spring-loaded member being coupled to the coupling member (127) intercoupling the closing members (90 and 91).

4. An apparatus as claimed in any one of the preceding claims, wherein the discharge apertures (70, 71) and the closing members (90, 91) are symmetrical to each other relative to the plane (72) having the longitudinal axis of the apparatus and standing upright in the normal direction of operative travel (69) of the apparatus.

5. An apparatus as according to any one of the preceding claims wherein the closing members (90, 91) are provided with hinge pins (97) hingeably supported in adjusting arms (102, resp. 103) of an adjusting mechanism.

6. An apparatus as claimed in claim 5, wherein the two intercoupled closing members (90, 91) are connected to an adjustable locking rod (132), owing to which the intercoupled closing members are adjustable in the direction parallel to the direction of the hinge pins (97) with which the closing members are connected to the adjusting mechanism.

7. An apparatus as claimed in any one of the preceding claims wherein the spring-loaded member (130) is coupled with an adjusting member (113) supported in the apparatus.

8. An apparatus as claimed in claim 7 wherein the adjusting arms (102, 103) with which the closing members (90, 91) are connected by the hinge pins (97) and the adjusting member (113) are coupled to an adjusting shaft (104) which is pivotable around its longitudinal axis and supported in the frame of the apparatus, the said adjusting member (113) being coupled with the adjusting shaft by a supporting arm (108).

9. An apparatus as claimed in claim 7 or 8, wherein the adjusting member (113) is slidable supported in bearings (117, 118) connected with the apparatus, the adjusting member is provided with stop means (120, 121) at least one of which is adjustable relative to the further parts of the adjusting member for determining the distance over which the closing members can be adjusted relative to the discharge apertures.

10. An apparatus as claimed in claim 7, 8 or 9, characterized in that the adjusting member (113) is coupled to a control member (123) with which the adjusting member (113) is movable in its supports.

11. An apparatus as claimed in any one of the preceding claims, characterized in that the two discharge funnels (31, 32) of the hopper (2) have bottom walls (35, 36) provided perpendicularly to the centre lines (74, 75) of the discharge funnels and in which the discharge apertures (70, 71) are made, these bottom walls being at least approximately in parallel with a plane in parallel to which the spreader members (3, 4) move during operation, the closing members (90, 91) being located in parallel with the bottom walls and being interconnected by a coupling strip (127) which by means of a tension spring is coupled to the adjusting member (113) located higher than the coupling strip.

12. An apparatus as claimed in any one of the claims 7 to 11, characterized in that the apparatus includes a stepped adjusting member (198) having different widths in its longitudinal direction, which widths can be disposed between a stop (120) on the adjusting member (113) and a support (115) of the adjusting member in the apparatus for setting the stop (120) with respect to the adjusting member (113).

13. An apparatus as claimed in any one of the preceding claims, characterized in that a discharge aperture (70, 71) has two edges (77, 78) which are offset relative to each other, whilst the closing member (90, 91) has an edge (98) which is located such that at the start of opening of the discharge aperture two spaced apart portions of the apertures (70, 71) are opened.

14. An apparatus as claimed in claim 13, characterized in that the offset edges (77, 78) of the discharge aperture are located in parallel and remote from each other and are interconnected by an intermediate edge (79), these mutually parallel portions having approximately the same length, whilst the remote ends of the parallel edges are predominantly coupled to each other by a curved edge (76).

15. An apparatus as claimed in any one of the preceding claims, characterized in that the discharge apertures (70, 71) in the discharge funnels (31, 32) are symmetrical to each other relative to a longitudinal symmetry plane (72) of the apparatus, whilst the two spreader members (3, 4) are also symmetrical relative to this longitudinal plane (72) and rotate in opposite directions (191, 192) during operation, the location of the discharge aperture (70, 71) and the shape of the spreading members (3, 4) and the velocity thereof being such that each of the spreader members spreads the material over a strip of land, during operation of the apparatus, which coincides with the strip over which the other spreader member spreads the material.

16. An apparatus as claimed in any one of the preceding claims, characterized in that the spreader members (3, 4) each have a centre portion (177) whose periphery is located within or at least approximately within the circumference of an imaginary cylinder which includes the sides of the discharge apertures (70, 71) which are located furthest from the rotary axes of the spreader members, whilst outside this imaginary cylinder the spreader members have throwing blades (157).

17. An apparatus as claimed in claim 16, characterized in that in vertical cross-sectional view the spreader blades (157) are U-shaped and have forwardly projecting legs (183, 185) relative to the direction of rotation, the upper leg (185) being wider near the centre portion of the spreader members and near the periphery of the spreader members.

18. An apparatus as claimed in any one of the preceding claims, characterized in that at one side of the apparatus the spreader members (3, 4) are surrounded by a shielding cover (213), the shielding cover being located at the same side of a plane (173) containing the two rotary axes (74, 75) of the spreader members (3, 4) and the discharge funnels (31, 32) as where the discharge apertures are present.

19. An apparatus as claimed in any one of the preceding claims, characterized in that the two discharge funnels (31, 32) are made from one single piece of material and that mating nozzles (40, 41) of an upper portion (30) of the hopper (2) are arranged in the upper side of the discharge funnels and are connected thereto, the upper portion of the hopper being fastened to the frame.

20. An apparatus as claimed in any one of the preceding claims, characterized in that the frame (1) at the front of the apparatus includes frame pillars (6, 7) which extend upwardly and whose top sides are interconnected by a frame beam (8) to which the hopper (2) is coupled, whilst the upwardly extending frame pillars include connection members (15) by means of which the apparatus is couplable to the lifting arms of a tractor or a suchlike vehicle, the lower end of the upwardly extending frame pillars being intercoupled by a frame portion (9) which extends to the rear from the frame pillars.

21. An apparatus as claimed in claim 20, characterized in that at least one of the connection members (15) is adjustable for height relative to the frame (1) and is optionally lockable in one of at least two different positions.

22. An apparatus as claimed in any one of the preceding claims, characterized in that the two spreader members (3, 4) are provided on shafts (140, 141) which are bearing-supported in a transmission box (56), which by means of carrier beams (48, 49) is coupled to the discharge portion (29) of the hopper, the transmission box comprises two gear boxes (144, 146) which are interconnected by a hollow cylindrical beam (145) which interconnects the transmission members in the gear boxes and in which a shaft (147) is bearing-supported. One of the gear boxes (146) having a projecting stub end (150) which is couplable to the power take-off shaft of a tractor or suchlike vehicle.

23. An apparatus as claimed in claim 22, characterized in that the shafts (144, 146) which are bearing-supported in the transmission box and to which the spreader members (3, 4) are fastened extend upwardly to in the discharge funnels (31, 32) and to each shaft is coupled a stirrer member (166) which is disposed in the bottom end of the discharge funnel and to which a scraper (167) is fastened, capable of hinging, the shafts are provided with connecting rings (155) to which the spreader members are fastened, a shielding cover being located over each of these connection rings, which covers extend downwardly around the upper end of the relevant gear box and are connected to the connection rings, together with the spreader members.

**Patentansprüche**

1. Vorrichtung zum Ausstreuen von körnigem und/oder pulverigem Gut, mit einem Rahmen (1) und einem Vorratsbehälter (2), der zwei Auslaßtrichter (31 und 32) aufweist, unter denen je ein Streuglied (3 und 4) angeordnet ist und die jeweils mindestens eine Auslaßöffnung (70 bzw. 71) aufweisen, durch die hindurch das Gut von dem Vorratsbehälter (2) dem jeweiligen Streuglied zugeführt werden kann, mit einem bewegbaren Schließglied (90, 91), das nahe jeder dieser beiden Auslaßöffnungen angeordnet ist, um sie wahlweise mehr oder weniger weit zu verschließen, wobei die Schließglieder an der die Auslaßöffnung umgebenden Bodenwand (35, 36) anliegend angeordnet sind, dadurch gekennzeichnet, daß die beiden Schließglieder (90, 91) miteinander gekuppelt und gemeinsam an der die jeweilige Auslaßöffnung (70, 71) umgebenden Bodenwand (35, 36) mittels eines federbelasteten Gliedes (130) unter Spannung anliegend gehalten sowie gegen dir Wirkung des federbelasteten Gliedes (130) in Richtung von der Bodenwand (35, 36) weg frei bewegbar sind.

2. Vorrichtung nach Anspruch 1, dadurch gekennzeichnet, daß jedes Schließglied (90 und 91) von einem Stellarm (102 bzw. 103) und dem federbelasteten Glied (130) abgestützt ist.

3. Vorrichtung nach Anspruch 1 oder 2, dadurch gekennzeichnet, daß das federbelastete Glied mit dem die Schließglieder (90 und 91) verbindenden Kupplungsglied (127) verbunden ist.

4. Vorrichtung nach einem der vorhergehenden Ansprüche, bei der die Auslaßöffnungen (70, 71) und die Schließglieder (90, 91) zueinander symmetrisch sind, bezogen auf die in der Arbeitsrichtung (69) der Vorrichtung aufrecht stehende, die Längsachse der Vorrichtung enthaltende Ebene (72).

5. Vorrichtung nach einem der vorhergehenden Ansprüche, bei der die Schließglieder (90, 91) mit Gelenkstiften (97) versehen sind, die in Stellarmen (102 bzw. 103) einer Stellvorrichtung gelenkig abgestützt sind.

6. Vorrichtung nach Anspruch 5, bei der die miteinander gekuppelten Schließglieder (90, 91) mit einer verstellbaren Arretierstange (132) derart verbunden sind, daß sie parallel zu den Gelenkstiften (97) verstellbar sind, über die die Schließglieder mit der Stellvorrichtung verbunden sind.

7. Vorrichtung nach einem der vorhergehenden Ansprüche, bei der das federbelastete Glied (130) mit einem in der Vorrichtung abgestützten Stellglied (113) gekuppelt ist.

8. Vorrichtung nach Anspruch 7, bei der die Stellarme (102, 103), mit denen die Schließglieder (90, 91) über die Gelenkstifte (97) verbunden sind, und das Stellglied (113) mit einer Stellachse (104) gekuppelt sind, die um ihre Längsachse drehbar und im Rahmen der Vorrichtung abgestützt ist, und die mit dem Stellglied (113) durch einen Tragarm (108) verbunden ist.

9. Vorrichtung nach Anspruch 7 oder 8, bei der das Stellglied (113) in mit der Vorrichtung verbundenen Lagern (117, 118) gleitend geführt und mit Anschlägen (120, 121) versehen ist, von denen mindestens einer relativ zu den übrigen Teilen des Stellgliedes einstellbar ist, um den Stellweg des Schließgliedes in bezug auf die Auslaßöffnungen zu bestimmen.

10. Vorrichtung nach Anspruch 7, 8 oder 9, dadurch gekennzeichnet, daß das Stellglied (113) mit einem Steuerglied (123) verbunden ist, mit dem das Stellglied (113) in seinen Trägern bewegbar ist.

11. Vorrichtung nach einem der vorhergehenden Ansprüche, dadurch gekennzeichnet, daß die beiden Auslaßtrichter (31, 32) des Vorratsbehälters (2) Bodenwände (35, 36) aufweisen, die rechtwinklig zu den Mittellinien (74, 75) der Auslaßtrichter liegen und in denen die Auslaßöffnungen (70, 71) angebracht sind, daß die Bodenwände mindestens annähernd parallel zu einer Ebene liegen, zu der sich die Streuglieder (3, 4) im Betrieb parallel bewegen, und daß die Schließglieder (90, 91) parallel zu den Bodenwänden angeordnet und durch einen Kupplungsstreifen (127) verbunden sind, der über eine Zugfeder mit dem Stellglied (113) verbunden ist, das höher als der Kupplungsstreifen (127) angeordnet ist.

12. Vorrichtung nach einem der Ansprüche 7 bis 11, dadurch gekennzeichnet, daß die Vorrichtung ein gestuftes Stellglied (198) aufweist, das über seine Länge unterschiedliche Breiten hat, die zwischen einem an dem Stellglied (113) befindlichen Anschlag (120) und einem Träger (115) des Stellgliedes in der Vorrichtung angeordnet werden können, um den Anschlag (120) in bezug auf das Stellglied (113) festzulegen.

13. Vorrichtung nach einem der vorhergehenden Ansprüche, dadurch gekennzeichnet, daß eine Auslaßöffnung (70, 71) zwei gegeneinander versetzte Kanten (77, 78) aufweist, während das Schließglied (90, 91) eine Kante (98) hat, die derart angeordnet ist, daß zu Beginn der Öffnung der Auslaßöffnung zwei separate Teile der Auslaßöffnungen (70, 71) geöffnet werden.

14. Vorrichtung nach Anspruch 13, dadurch gekennzeichnet, daß die gegeneinander versetzten Kanten (77, 78) der Auslaßöffnung parallel und mit Abstand voneinander angeordnet und durch eine Zwischenkante (79) verbunden sind, wobei diese zueinander parallelen Teile etwa gleiche Länge haben, während die voneinander angewandten Enden der parallelen Kanten vorwiegend durch eine bogenförmige Kante (76) verbunden sind.

15. Vorrichtung nach einem der vorhergehenden Ansprüche, dadurch gekennzeichnet, daß die Auslaßöffnungen (70, 71) in den Auslaßtrichtern (31, 32) in bezug auf eine Längssymmetrieebene (72) der Vorrichtung zueinander symmetrisch sind, daß die beiden Streuglieder (3, 4) ebenfalls symmetrisch zu dieser Längsebene (72) sind und im Betrieb in entgegengesetzten Richtungen (191, 192) rotieren, und daß die Anordnung der Auslaßöffnung (70, 71) und die Form der Streuglieder (3, 4) und deren Geschwindigkeit derart gewählt sind, daß jedes der Streuglieder das Gut im Betrieb auf denselben Geländestreifen streut wie das jeweils andere Streuglied.

16. Vorrichtung nach einem der vorhergehenden Ansprüche, dadurch gekennzeichnet, daß die Streuglieder (3, 4) jeweils ein Mittelstück (177) aufweisen, dessen Peripherie innerhalb oder mindestens annähernd innerhalb des Umfangs eines gedachten Zylinders liegt, der die von den Drehachsen der Streuglieder am weitesten entfernten Seiten der Auslaßöffnungen (70, 71) enthält, und daß die Streuglieder außerhalb dieser gedachten Zylinders Wurfschaufeln (157) aufweisen.

17. Vorrichtung nach Anspruch 16, dadurch gekennzeichnet, daß die Wurfschaufeln (157) im vertikalen Querschnitt U-förmig sind und in bezug auf die Drehrichtung nach vorne gerichtete Schenkel (183, 185) aufweisen, von denen der obere Schenkel (185) nahe dem Mittelstück der Streuglieder und nahe der Peripherie der Streuglieder breiter ist.

18. Vorrichtung nach einem der vorhergehenden Ansprüche, dadurch gekennzeichnet, daß die Streuglieder (3, 4) an einer Seite der Vorrichtung von einem Abdeckschirm (213) umgeben sind, der auf derjenigen Seite der die beiden Drehachsen (74, 75) der Streuglieder (3, 4) und die Achsen der Auslaßtrichter (31, 32) enthaltenden Ebene (173) angeordnet ist, auf der sich die Auslaßöffnungen befinden.

19. Vorrichtung nach einem der vorhergehenden Ansprüche, dadurch gekennzeichnet, daß die beiden Auslaßtrichter (31, 32) aus einem einzigen Materialstück hergestellt sind, und daß Paßstutzen (40, 41) eines oberen Teiles (30) des Vorratsbehälters (2) oben in die Auslaßtrichter eingesetzt und mit ihnen verbunden sind, wobei der obere Teil des Vorratsbehälters an dem Rahmen befestigt ist.

20. Vorrichtung nach einem der vorhergehenden Ansprüche, dadurch gekennzeichnet, daß der Rahmen (1) an der Vorderseite der Vorrichtung Rahmenstützen (6, 7) aufweist, die nach oben gerichtet und an ihren Oberseiten durch einen Rahmenbalken (8) verbunden sind, mit dem der Vorratsbehälter (2) verbunden ist, wobei die aufwärts gerichteten Rahmenstützen Verbindungsglieder (15) aufweisen, mit denen die Vorrichtung an die Hebearme eines Schleppers oder ähnlichen Fahrzeugs anzuschließen ist, und daß die unteren Enden der aufwärts gerichteten Rahmenstützen durch eine Rahmenteil (9) verbunden sind, das sich von den Rahmenstützen aus nach hinten erstreckt.

21. Vorrichtung nach Anspruch 20, dadurch gekennzeichnet, daß mindestens eines der Verbindungsglieder (15) relativ zu dem Rahmen (1) höhenverstellbar und wahlweise in einer von mindestens zwei Positionen verriegelbar ist.

22. Vorrichtung nach einem der vorhergehenden Ansprüche, dadurch gekennzeichnet, daß die beiden Strueglieder (3, 4) auf Wellen (140, 141) angeordnet sind, die in einem Getriebekasten (56) gelagert sind, welcher mittels Tragbalken (48, 49) mit dem Auslaßteil (29) des Vorratsbehälters verbunden ist und zwei Getriebegehäuse (144, 146) aufweist, welche durch einen zylindrischen, die Übertragungsglieder in den Getriebegehäusen verbindenden Hohlbalken (145) verbunden sind, in dem eine Welle (147) gelagert ist, wobei eines der Getriebegehäuse (146) einen nach außen ragenden Wellenzapfen (150) aufweist, der mit der Zapfwelle eines Schleppers oder ähnlichen Fahrzeuges zu kuppeln ist.

23. Vorrichtung nach Anspruch 22, dadurch gekennzeichnet, daß sich die in dem Getriebekasten gelagerten Wellen (144, 146), an denen die Strueglieder (3, 4) befestigt sind, nach oben in die Auslaßtrichter (31, 32) erstrecken, und daß mit jeder Welle ein Rührglied (166) verbunden ist, das im unteren Ende des Auslaßtrichters angeordnet und mit dem ein Schaber (167) gelenkig verbunden ist, daß die Wellen mit Anschlußringen (155) versehen sind, an denen die Strueglieder befestigt sind, daß über jedem der Anschlußringe eine Abschirmkappe angeordnet ist, und daß sich die Abschirmkappen nach unten erstrecken, das obere Ende des zugehörigen Getriebegehäuses umgeben und zusammen mit den Strugliedern an den Anschlußringen befestigt sind.

## Revendications

1. Appareil pour épandre une matière granulaire et/ou pulvérulente, comprenant un chassis (1) et une trémie (2) ayant deux goulottes d'écoulement (31 et 32), un organe épandeur (3 et 4) étant disposé sous chaque goulotte, chaque goulotte d'écoulement ayant au moins une ouverture d'écoulement (70, 71) à travers laquelle la matière peut être débitée à partir de la trémie (2) à l'organe épandeur respectif, un organe obturateur mobile (90, 91) étant disposé près de chacune des ces ouvertures d'écoulement pour obturer, au choix, l'ouverture d'écoulement respective dans une mesure plus ou moins grande, ces organes obturateurs étant placés contre la paroi de fond (35, 36) autour de l'ouverture d'écoulement, caractérisé en ce que les deux organes obturateurs (90, 91) sont couplés entre eux et sont placés ensemble contre la paroi de fond (35, 36) autour de l'ouverture d'écoulement respective (70, 71) en étant maintenus en tension au moyen d'un organe (130) sollicité par un ressort et étant librement mobiles dans une direction les éloignant de la paroi de fond (35, 36) contre l'action de l'organe (130) sollicité par un ressort.

2. Appareil selon la revendication 1, caractérisé en ce que chaque organe obturateur (90, 91) est supporté par un bras de réglage (102, 103) et par l'organe (130) sollicité par un ressort.

3. Appareil selon la revendication 1 ou 2, caractérisé en ce que l'organe sollicité par un ressort est couplé à un organe d'accouplement (127) couplant entre eux les organes obturateurs (90, 91).

4. Appareil selon l'une quelconque des revendications précédentes, dans lequel les ouvertures d'écoulement (70, 71) et les organes obturateurs (90, 91) sont symétriques l'un(e) à l'autre par rapport au plan (72) contenant l'axe longitudinal de l'appareil et se tenant debout dans le sens normal de marche (69) de travail de l'appareil.

5. Appareil selon l'une quelconque des revendications précédentes, dans lequel les organes obturateurs (90, 91) sont munis de pivots (97) supportés de manière articulée dans des bras de réglage (102, 103) d'un mécanisme de réglage.

6. Appareil selon la revendication 5, dans lequel les deux organes obturateurs (90, 91) couplés entre eux sont reliés à une tige réglable de verrouillage (132) au moyen de laquelle les organes obturateurs couplés entre eux sont réglables dans le sens parallèle au sens des pivots (97) par lesquels les organes obturateurs sont reliés au mécanisme de réglage.

7. Appareil selon l'une quelconque des revendications précédentes, dans lequel l'organe (130) sollicité par un ressort est accouplé à un organe de réglage (113) supporté dans l'appareil.

8. Appareil selon la revendication 7, dans lequel les bras de réglage (102, 103) auxquels les organes obturateurs (90, 91) sont reliés par les pivots (97) et l'organe de réglage (113) sont accouplés à un arbre de réglage (104) pouvant pivoter autour de son axe longitudinal et supporté dans le chassis de l'appareil, ledit organe de réglage (133) étant couplé avec l'arbre de réglage par un bras de support (108).

9. Appareil selon la revendication 7 ou 8, dans lequel l'organe de réglage (113) est supporté de manière coulissante dans des paliers (117, 118) reliés à l'appareil, l'organe de réglage étant muni de moyens de butée (120, 121) dont un au moins est réglable par rapport aux autres parties de l'organe de réglage pour déterminer la distance sur laquelle les organes obturateurs peuvent être réglés par rapport aux ouvertures d'écoulement.

10. Appareil selon la revendication 7, 8 ou 9, caractérisé en ce que l'organe de réglage (113) est accouplé à un organe de commande (123) au moyen duquel l'organe de réglage (113) est mobile dans ses supports.

11. Appareil selon l'une quelconque des revendications précédentes, caractérisé en ce que les deux goulottes d'écoulement (31, 32) de la trémie (2) ont des parois de fond (35, 36) prévues perpendiculairement aux axes (74, 75) des goulottes d'écoulement et dans lesquelles sont ménagées les ouvertures d'écoulement (70, 71), ces parois de fond étant au moins approximativement parallèles à un plan dans lequel se déplacent les organes épandeurs (3, 4) pendant le travail, les organes obturateurs (90, 91) étant disposés en parallèle avec les parois de fond et étant interconnectés par une barre plate d'accouplement (127) qui est couplée, au moyen d'un ressort de tension, à l'organe de réglage (113) situé plus haut que la barre d'accouplement.

12. Appareil selon l'une quelconque des revendications 7 à 11, caractérisé en ce qu'il comprend un organe de réglage à gradins (198) ayant des largeurs différentes dans son sens longitudinal, lesquelles largeurs peuvent être disposées entre une butée (120) sur l'organe de réglage (113) et un support (115) de l'organe de réglage dans l'appareil pour régler la butée (120) par rapport à l'organe de réglage (113).

13. Appareil selon l'une quelconque des revendications précédentes, caractérisé en ce qu'une ouverture d'écoulement (70, 71) a deux bords (77, 78) qui sont décalés entre eux, tandis que l'organe obturateur (90, 91) a un bord (98) qui est situé de telle sorte qu'au commencement du mouvement d'ouverture de l'ouverture d'écoulement, deux parties, espacées l'une de l'autre, des ouvertures (70, 71) sont ouvertes.

14. Appareil selon la revendication 13, caractérisé en ce que les bords décalés (77, 78) de l'ouverture d'écoulement sont situés en parallèle et distants l'un de l'autre et sont interconnectés par un bord intermédiaire (79), ces parties parallèles entre elles ayant approximativement la même longueur, tandis que les extrémités distantes des bords parallèles sont principalement reliées entre elles par un bord courbe (76).

15. Appareil selon l'une quelconque des revendications précédentes, caractérisé en ce que les ouvertures d'écoulement (70, 71) dans les goulottes d'écoulement (31, 32) sont symétriques entre elles par rapport à un plan de symétrie longitudinal (72) de l'appareil, tandis que les deux organes épandeurs (3, 4) sont, eux aussi, symétriques par rapport à ce plan longitudinal (72) et tournent en sens opposés (191, 192) au cours du travail, l'emplacement des ouvertures d'écoulement (70, 71) et al forme des organes épandeurs (3, 4) et leur vitesse étant tels que chacun des organes épandeurs répande la matière sur une bande de terrain, pendant le travail de l'appareil, qui coïncide avec la bande sur laquelle l'autre organe épandeur répand la matière.

16. Appareil selon l'une quelconque des revendications précédentes, caractérisé en ce que les organes épandeurs (3, 4) ont chacun une partie centrale (177) dont la périphérie est située dans, ou au moins approximativement dans la circonférence d'un cylindre imaginaire contenant les côtés des ouvertures d'écoulement (70, 71) qui sont les plus éloignés des axes de rotation des organes épandeurs, tandis qu'au dehors de ce cylindre imaginaire les organes épandeurs ont des lames éjectrices (157).

17. Appareil selon la revendication 16 caractérisé en ce que, vues en coupe verticale, les lames d'épandage (157) sont en forme de U et ont des branches dépassant vers l'avant (183, 185) par rapport au sens de rotation, la branche supérieure (185) étant plus large près de la partie centrale des organes épandeurs et près de la périphérie des organes épandeurs.

18. Appareil selon l'une quelconque des revendications précédentes, caractérisé en ce que, sur un côté de l'appareil, les organes épandeurs (3, 4) sont entourés d'un écran (213), l'écran étant situé sur le même côté d'un plan (173) contenant les deux axes de rotation (74, 75) des organes épandeurs (3, 4) et les goulottes d'écoulement (31, 32) où sont présentes les ouvertures d'écoulement.

19. Appareil selon l'une quelconque des revendications précédentes, caractérisé en ce que les deux goulottes d'écoulement (31, 32) sont faites d'une seule pièce de matière et en ce que des becs (40, 41) épousant la forme d'une partie supérieure (30) de la trémie sont disposés dans le côté supérieur des goulottes d'écoulement et sont reliés à celles-ci, la partie supérieure de la trémie étant attachée au chassis.

20. Appareil selon l'une quelconque des revendications précédentes, caractérisé en ce que le chassis (1) à l'avant de l'appareil comporte des montants de chassis (6, 7) qui s'étendent vers le haut et dont les côtés supérieurs sont interconnectés par une poutre de chassis (8) à laquelle la trémie (2) est couplée, tandis que les montants de chassis (6, 7) s'étendant vers le haut comprennent des organes de liaison (15) au moyen desquels l'appareil peut être attelé aux bras de levage d'un tracteur ou autre véhicule analogue, l'extrémité inférieure des montants de chassis s'étendant vers le haut étant intercouplée par une partie de chassis (9) qui s'étend vers l'arrière à partir des montants du chassis.

21. Appareil selon la revendication 20, caractérisé en ce qu'au moins un des organes de liaison (15) est réglable en hauteur par rapport au chassis (1) et est verrouillable, au choix, en au moins une des deux positions différentes.

22. Appareil selon l'une quelconque des revendications précédentes, caractérisé en ce que les deux organes épandeurs (3, 4) sont prévus sur des arbres (140, 141) qui sont portés par des paliers dans une boîte de transmission (56) qui est couplée, au moyen de poutres porteuses (48, 49) à la partie d'écoulement (29) de la trémie, la boîte de transmission comprenant deux boîtes d'engrenages (144, 146) qui sont interconnectées par une poutre cylindrique creuse (145) qui relie entre eux les organes de transmission dans les boîtes d'engrenages et dans laquelle un arbre (147) est soutenu par des paliers, une des boîtes d'engrenages (146) ayant un prolongement d'arbre (150) dépassant pouvant être raccordé à l'arbre de prise de force d'un tracteur ou véhicule analogue.

23. Appareil selon la revendication 22, caractérisé en ce que les arbres (144, 146) qui sont soutenus par des paliers dans la boîte de transmission et sur lesquels sont fixés les organes épandeurs (3, 4) s'étendent vers le haut dans les goulottes d'écoulement (31, 32) et en ce qu'à chaque arbre est couplé un organe agitateur (166) qui est disposé dans la partie inférieure de la goulotte d'écoulement et auquel est fixé un râcleur (167) articulé, les arbres étant munis de bagues de liaison (155) auxquelles sont attachés les organes épandeurs, un écran protecteur étant disposé sur chacune des ces bagues de liaison, ces écrans s'étendant vers le bas autour de l'extrémité supérieure de la boîte d'engrenages correspondante et étant reliés aux bagues de liaison, ensemble avec les organes épandeurs.

Fig. 1

FIG. 2

FIG. 3

FIG. 4

FIG. 5

FIG. 6

5